Europäisches Patentamt

European Patent Office

Office européen des brevets

(19)

(11) EP 0 980 187 A1

(12) **EUROPEAN PATENT APPLICATION**

(43) Date of publication:
**16.02.2000 Bulletin 2000/07**

(51) Int Cl.⁷: **H04N 9/04**

(21) Application number: **98830493.7**

(22) Date of filing: **10.08.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: STMicroelectronics S.r.l.
**20041 Agrate Brianza (Milano) (IT)**

(72) Inventors:
• **Bisio, Marco**
  **41100 Modena (IT)**

• **Rambaldi, Roberto**
  **40129 Bologna (IT)**
• **Guerrieri, Roberto**
  **40122 Bologna (IT)**

(74) Representative: **Pezzoli, Ennio et al**
  **Jacobacci & Perani S.p.A.**
  **Via Senato, 8**
  **20121 Milano (IT)**

(54) **Interpolation method for obtaining a digital colour image**

(57)    An interpolation method (200) for obtaining a digital image constituted by a matrix of elements each comprising at least one colour component representative of an elemental area of the image includes the steps of providing (210) an incomplete digital image having at least one incomplete element in which at least one colour component is missing, each missing colour component in each incomplete element being present in opposed elements disposed on opposite sides of the incomplete element along at least one direction, determining (230), for each missing colour component of each incomplete element, an interpolation direction in which a variation of the corresponding colour components of the opposed elements is least, and setting (235) the missing colour component at a value equal to a mean of the corresponding colour components of the opposed elements along the interpolation direction.

FIG.2

**Description**

The present invention relates to an interpolation method for obtaining a digital image and, in particular, to an interpolation method according to the preamble to the first claim.

Digital images are used in various applications such as, for example, in digital camera. A digital image is constituted by a matrix of elements each representative of an elemental area of the image (a pixel); each element of the matrix includes one or more colour components (typically red, green and blue, or RGB) associated with the pixel.

In various situations, an interpolation process is commonly used to derive digital images from an incomplete digital image. For example, each element of a digital image acquired by a photographic machine is generally incomplete and includes only one colour component (R, G or B); in this case, the missing colour components of each incomplete element are derived by interpolation according to the colour components of the adjacent elements. The (complete) digital image in which, for each element, all of the colour components R, G and B that is, all of the chrominance and luminance components which characterize the element are defined, can thus be produced.

A known interpolation method consists in calculating each missing colour component by means of an arithmetic mean of the corresponding colour components of the adjacent elements; the colour component already present in the incomplete element is generally also averaged with the corresponding colour components of the adjacent elements. Although this solution is quite simple and easy to implement, it produces poor-quality digital images.

A different interpolation method, described in US-A-5,652,621, provides a sophisticated algorithm which derives luminance data from the G colour components and chrominance information from the R and B colour components of the incomplete digital image. The missing colour components are determined by means of gradient analysis, by the conversion of these luminance and chrominance values with the use of tables of coefficients for weighting the luminance and chrominance values according to the element under examination.

However, the method described in this document is extremely complex. In particular, when this method is implemented by means of a physical device (hardware) produced in integrated form in a chip of semiconductor material, it takes up a considerable area on the chip and involves a high power consumption at the execution stage; these disadvantages are noticed particularly in applications in portable apparatus in which it is extremely important to keep the dimensions of the apparatus and its power consumption low (since the apparatus is supplied by means of batteries). Moreover, the complexity of the method slows down the interpolation operation excessively; this drawback may be intolerable in many applications such as, for example, in the case of video sequences, in which it is necessary to perform the interpolation operation on-line.

The object of the present invention is to overcome the aforementioned drawbacks. To achieve this object, an interpolation method for obtaining a digital image as described in the first claim is proposed.

In short, the present invention provides an interpolation method for obtaining a digital image constituted by a matrix of elements each comprising at least one colour component representative of an elemental area of the image, the method including the steps of providing an incomplete digital image having at least one incomplete element in which at least one colour component is missing, each missing colour component in each incomplete element being present in opposed elements disposed on opposite sides of the incomplete element along at least one direction, determining, for each missing colour component of each incomplete element, an interpolation direction in which a variation of the corresponding colour components of the opposed elements is least, and setting the missing colour component at a value equal to a mean of the corresponding colour components of the opposed elements along the interpolation direction.

The present invention also proposes a corresponding interpolation device and a digital camera comprising the device.

Further characteristics and the advantages of the interpolation method for obtaining a digital image according to the present invention will become clear from the following description of a preferred embodiment thereof, given by way of non-limiting example, with reference to the appended drawings, in which:

Figure 1 is a basic block diagram of a digital camera in which the method of the present invention can be used,

Figure 2 shows, in a flow chart, an example of the interpolation method according to the present invention.

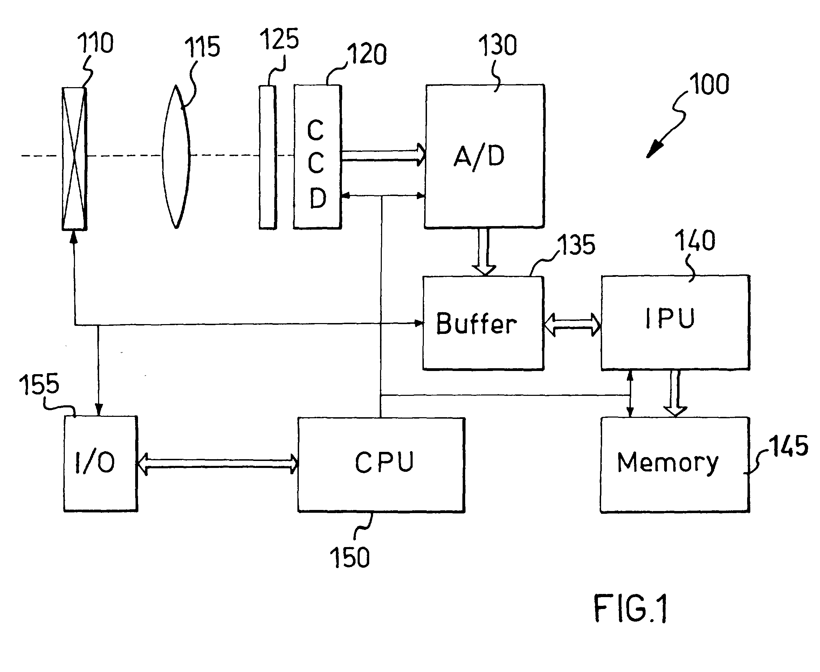

With reference in particular to Figure 1, this shows a digital camera 100 which can acquire digital images representative of a real scene. The digital image is constituted by a matrix with N rows and M columns (for example, 512 rows by 384 columns) in which each element $Pix(RGB)_{i,j}$ (where i=1...N and j=1..M) includes a red colour component (R), a green colour component (G), and a blue colour component (B), representative of the red, green or blue colour intensity of a pixel, respectively. Mixing of the RGB colour components of each pixel enables high-quality colour images to be obtained. Similar considerations apply if each pixel is broken down into different colour components, or if a single colour component indicative of the luminosity level (grey level) associated with the pixel is used, etc.

The digital camera 100 includes an image-acquisition unit comprising a diaphragm 110 and a set of lenses 115 for transmitting the light corresponding to the image of the real scene onto a light sensor 120. The light sensor 120 is typically constituted by a charge-coupled device (or CCD); a CCD is an integrated circuit which contains a matrix of light-sensitive cells, each of which generates an electrical signal (for example, a voltage) the intensity of which is proportional to the exposure of the light-sensitive cell.

In general, in order to reduce the number of light-sensitive cells, the light sensor 120 does not detect all of the RGB colour components in every pixel. Typically, only one light-sensitive cell of the light sensor 120 is provided for each pixel. The light sensor 120 is covered by a colour filter 125 constituted by a matrix of filter elements each of which covers a corresponding light-sensitive cell of the light sensor 120; each filter element transmits (absorbing a minimal portion) the luminous radiation belonging solely to the wavelength of red, blue or green light (substantially absorbing the others), so as to obtain an individual value indicative of the R, G or B colour component for each pixel. In particular, the filter 125 is of the Bayer type as described in US-A-3,971,065, in which, in half of the pixels, in a chessboard-like arrangement, only the G colour components are detected; in the other half of the pixels, the R or B colour components are detected in respective alternate rows, as shown in the following table:

| . . . | . . . | . . . | . . . | . . . | . . . | . . . | . . . | . . . | . . . | . . . |
|-------|-------|-------|-------|-------|-------|-------|-------|-------|-------|-------|
| . . . | G | R | G | R | G | R | G | R | G | . . . |
| . . . | B | G | B | G | B | G | B | G | B | . . . |
| . . . | G | R | G | R | G | R | G | R | G | . . . |
| . . . | B | G | B | G | B | G | B | G | B | . . . |
| . . . | . . . | . . . | . . . | . . . | . . . | . . . | . . . | . . . | . . . | . . . |

The diaphragm 110 is always open and the light is focused by the lenses 115 through the filter 125, onto the light sensor 120 which acquires the image continuously. When a photograph is taken, the electrical signal generated by each light-sensitive cell is supplied to an analog/digital converter (A/D) 130 which produces a corresponding digital value. The incomplete digital image constituted by these values, in which each element comprises a single colour component, is stored in a buffer memory 135.

The camera 100 also includes an image-processing unit (IPU) 140, preferably produced in integrated form in a chip of semiconductor material. The image-processing unit 140 reads the incomplete digital image from the buffer memory 135 and derives the missing colour components for each element by interpolation (as described in detail below) using the buffer memory 135 as a working memory for the intermediate results of the interpolation process. The digital image thus obtained is generally subjected to processing to improve image quality; for example, the digital image is processed to correct exposure problems such as back-lighting or excessive front illumination, to correct the shift of the light towards the red colour (reddish) or towards the blue colour (bluish), in dependence on the colour temperature of the light source, to correct a selected colour tone, etc. The image processing unit 140 can also enlarge digital images; the enlarged digital image includes all of the elements of the original digital image and the other elements (in which all the colour components are missing) are derived by an interpolation process similar to that used to derive the colour components not detected by the light sensor.

The digital image is then compressed (for example, reducing the quantity of associated data a few tens times) and supplied to a memory 145. The memory 145 is typically constituted by a dynamic memory with a capacity of a few Mbytes which can store several tens of compressed digital images; alternatively, the memory is a flash E2PROM which preserves the data even in the absence of a supply, or additional external memory cards with a capacity of a few hundred Mbytes are used.

A central processing unit (or CPU) 150 controls the several functions of the various components of the digital camera by means of suitable signals. The CPU 150 is connected to an input/output (I/O) device 155, constituted, for example, by a series of push-buttons (for enabling the user to select various functions of the camera) and by a liquid-crystal display (for supplying data on the operative state of the camera).

The present invention may, however, also be used in a digital camera of a different type, for example, with a CMOS light sensor, with another colour filter (not a Bayer filter), with a simplified image-processing unit, etc; alternatively, the interpolation method of the present invention is used in a digital video camera, in a portable scanner, in a processing system (a computer) in which graphic applications are provided, etc.

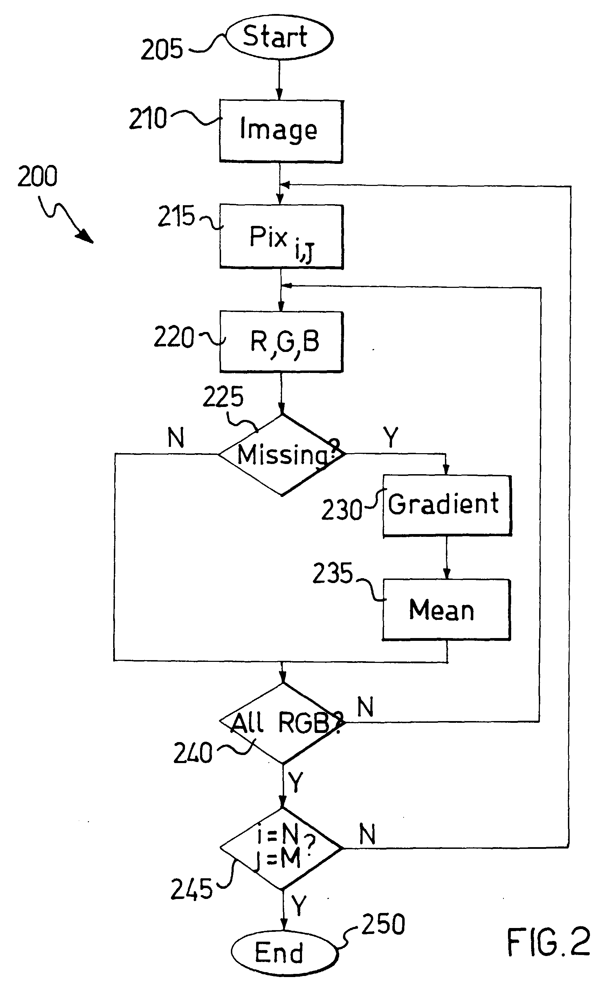

With reference now to Figure 2, an interpolation method 200 used in the digital camera described above starts in box 205 and then goes on to box 210 in which the incomplete digital image (detected by the light sensor through the Bayer filter) is supplied to the image processing unit; similar considerations apply if the incomplete digital image has a different structure, is obtained in the course of an enlargement operation, etc.; in general, an incomplete digital image having at least one incomplete element in which at least one colour component is missing is used, each missing colour component in each incomplete element being present in opposed elements disposed on opposite sides of the incomplete element along at least one direction.

It should be noted that the interpolation process does not require the availability of the entire incomplete digital image; to obtain the missing colour components of each incomplete element, only the colour components of the adjacent elements are in fact required (as described below) so that the interpolation process can start as soon as a block of the incomplete digital image comprising this data is available.

The method repeats N.M times a main cycle which starts in box 215 in which a generic element $Pix_{i,j}$ (where i=1.. N and j=1..M) is considered. Each element $Pix_{i,j}$ is incomplete and includes only the R colour component, $Pix_{i,j}(R)$, only the G colour component $Pix_{i,j}(G)$, or only the B colour component, $Pix_{i,j}(B)$.

A secondary cycle, which is repeated 3 times (once for each colour component R, G and B) is started in box 220, in which a certain colour component is considered; in particular, the R colour component is considered in a first execution of the secondary cycle, the G colour component is considered in a second execution of the cycle, and the B colour component is considered in a third execution.

The method then checks, in box 225, if the colour component considered is missing in the incomplete element $Pix_{i,j}$. If so, the method goes on to box 230, in which an interpolation direction is determined for the missing colour component. The missing colour component is in fact present in elements disposed on opposite sides of the incomplete element $Pix_{i,j}$ along one or more axes. In particular, considering the various elements adjacent the incomplete element $Pix_{i,j}$:

$$Pix_{i-1,j-1} \qquad Pix_{i-1,j} \qquad Pix_{i-1,j+1}$$
$$Pix_{i,j-1} \qquad Pix_{i,j} \qquad Pix_{i,j+1}$$
$$Pix_{i+1,j-1} \qquad Pix_{i+1,j} \qquad Pix_{i+1,j+1}$$

the missing colour component is present in the elements in opposed positions relative to the incomplete element $Pix_{i,j}$ along a horizontal direction (elements $Pix_{i,j-1}$ and $Pix_{i,j+1}$), along a vertical direction (elements $Pix_{i-1,j}$ and $Pix_{i+1,j}$), along a positive diagonal direction (elements $Pix_{i+1,j-1}$ and $Pix_{i-1,j+1}$), along a negative diagonal direction (elements $Pix_{i-1,j-1}$ and $Pix_{i+1,j+1}$), or along two or more of these axes.

If the missing colour component is present in elements in opposed positions relative to the incomplete element $Pix_{i,j}$ along only one direction (horizontal, vertical, positive diagonal, or negative diagonal), this direction is set as the interpolation direction.

When the missing colour component is present in elements in opposed positions relative to the incomplete element $Pix_{i,j}$ along two (or more) axes, however, a gradient of the corresponding colour components along these axes is calculated. In particular, the gradient along the horizontal direction is equal to $|Pix_{i,j-1} - Pix_{i,j+1}|$, the gradient along the vertical direction is equal to $|Pix_{i-1,j} - Pix_{i+1,j}|$, the gradient along the positive diagonal direction is equal to $|Pix_{i+1,j-1} - Pix_{i-1,j+1}|$, and the gradient along the negative diagonal direction is equal to $|Pix_{i-1,j-1} - Pix_{i+1,j+1}|$. The interpolation direction is then set as the direction in which this gradient is least, that is, in which a variation of the colour components corresponding to the missing colour component is least. It should be noted that, in the extremely rare event of the gradients having the same value, the interpolation direction selected is a predetermined (default) direction, for example, in order, the horizontal direction, the vertical direction, the positive diagonal direction, and the negative diagonal direction.

The method then goes on to box 235 in which the missing colour component is set at a value equal to a mean of the corresponding colour components of the elements opposed along the interpolation direction. The mean is preferably an arithmetic mean (so as to ensure good quality of the interpolation process whilst using extremely simple operations), although the use of a geometric mean or of a mean of another type is not excluded.

For example, the case is considered in which the incomplete element includes only the G colour component, $Pix_{i,j}$ (G). If the missing colour component R and the missing colour component B are present in the elements opposed along the horizontal and vertical axes, respectively, that is:

$Pix_{i-1,j-1}(G)$    $Pix_{i-1,j}(B)$    $Pix_{i-1,j+1}(G)$
$Pix_{i,j-1}(R)$    $Pix_{i,j}(G)$    $Pix_{i,j+1}(R)$
$Pix_{i+1,j-1}(G)$    $Pix_{i+1,j}(B)$    $Pix_{i+1,j+1}(G)$

these missing colour components are set so as to be equal to

$$Pix_{i,j}(R) = \frac{Pix_{i,j-1}(R) + Pix_{i,j+1}(R)}{2}$$

and

$$Pix_{i,j}(B) = \frac{Pix_{i-1,j}(B) + Pix_{i+1,j}(B)}{2}.$$

If the missing R colour component and the missing B colour component are present in elements opposed along the vertical and horizontal axes, respectively, that is:

$Pix_{i-1,j-1}(G)$    $Pix_{i-1,j}(R)$    $Pix_{i-1,j+1}(G)$
$Pix_{i,j-1}(B)$    $Pix_{i,j}(G)$    $Pix_{i,j+1}(B)$
$Pix_{i+1,j-1}(G)$    $Pix_{i+1,j}(R)$    $Pix_{i+1,j+1}(G)$ these missing colour components are set so as to be equal to

$$Pix_{i,j}(R) = \frac{Pix_{i-1,j}(R) + Pix_{i+1,j}(R)}{2}$$

and

$$Pix_{i,j}(B) = \frac{Pix_{i,j-1}(B) + Pix_{i,j+1}(B)}{2}.$$

When the incomplete element includes only the R colour component $Pix_{i,j}(R)$, that is :

$Pix_{i-1,j-1}(B)$    $Pix_{i-1,j}(G)$    $Pix_{i-1,j+1}(B)$
$Pix_{i,j-1}(G)$    $Pix_{i,j}(R)$    $Pix_{i,j+1}(G)$
$Pix_{i+1,j-1}(B)$    $Pix_{i+1,j}(G)$    $Pix_{i+1,j+1}(B)$ the missing G colour component is set so as to be equal to

$$Pix_{i,j}(G) = \frac{Pix_{i,j-1}(G) + Pix_{i,j+1}(G)}{2}$$

if $|Pix_{i,j-1}(G) - - Pix_{i,j+1}G)| < |Pix_{i-1,j}(G) - Pix_{i+1,j}(G)|$ or, otherwise, so as to be equal to

$$Pix_{i,j}(G) = \frac{Pix_{i-1,j}(G) + Pix_{i+1,j}(G)}{2}$$

Similarly, the missing B colour component is set so as to

$$Pix_{i,j}(B) = \frac{Pix_{i+1,j-1}(B) + Pix_{i-1,j+1}(B)}{2}$$

be equal to

$$\text{if } \left|Pix_{i+1,j-1}(B) - Pix_{i-1,j+1}(B)\right| < \left|Pix_{i-1,j-1}(B) - Pix_{i+1,j+1}(B)\right|$$

$$Pix_{i,j}(B) = \frac{Pix_{i-1,j-1}(B) + Pix_{i+1,j+1}(B)}{2}$$

or, otherwise, to be equal to

Finally, when the incomplete element includes only the B colour component, $Pix_{i,j}(B)$, that is :

$Pix_{i-1,j-1}(R) \qquad Pix_{i-1,j}(G) \qquad Pix_{i-1,j+1}(R)$
$Pix_{i,j+1}(G) \qquad Pix_{i,j}(B) \qquad Pix_{i,j+1}(G)$
$Pix_{i+1,j-1}(R) \qquad Pix_{i+1,j}(G) \qquad Pix_{i+1,j+1}(R)$ the missing G colour component is set so as to be equal to

$$Pix_{i,j}(G) = \frac{Pix_{i,j-1}(G) + Pix_{i,j+1}(G)}{2}$$

if $|Pix_{i,j-1}(G) - Pix_{i,j+1}(G)| < |Pix_{i-1,j}(G) - Pix_{i+1,j}(G)|$ or,

$$Pix_{i,j}(G) = \frac{Pix_{i-1,j}(G) + Pix_{i+1,j}(G)}{2}$$

otherwise, so as to be equal to

Similarly, the missing R colour component is set so as to be equal to

$$Pix_{i,j}(R) = \frac{Pix_{i+1,j-1}(R) + Pix_{i-1,j+1}(R)}{2}$$

if $|Pix_{i+1,j-1}(R) - Pix_{i-1,j+1}(R)| < |Pix_{i-1,j-1}(R) - Pix_{i+1,j+1}(R)|$ or, otherwise, so as to be equal to

$$Pix_{i,j}(R) = \frac{Pix_{i-1,j-1}(R) + Pix_{i+1,j+1}(R)}{2}.$$

The method then goes on to box 240 and checks if all of the colour components (R, G and B) have been considered. If not, the method returns to box 220, whereas if all of the components have been considered, the secondary cycle defined by boxes 220-235 is terminated. With further reference to box 225, if the colour component considered is present in the incomplete element $Pix_{i,j}$, the method goes directly to box 240 so that this colour component remains unchanged.

The method then goes on to box 245 in which the condition for exit from the main cycle defined by boxes 215-240 is checked, that is, it is checked whether i=N and j=M. If not, the method returns to box 215, whereas if so, the method terminates in the final box 250.

Similar considerations apply if the interpolation method is structured in a different manner; for example, if an enlarged digital image (in which only a portion of the elements are incomplete) is considered, all of the missing colour components R, G and B are obtained for each of the incomplete elements. In general, the method of the present invention provides steps for determining, for each missing colour component of each incomplete element, an interpolation direction in which a variation of the corresponding colour components of the opposed elements is least and sets the missing colour component at a value equal to a mean of the corresponding colour components of the opposed elements along the interpolation direction.

The interpolation method according to the present invention is extremely simple whilst producing a good-quality image. The device which implements the method occupies a small area on a chip of semiconductor material and involves a low power consumption at the execution stage; this makes the use of this method particularly advantageous in applications in which the corresponding device is included (embedded) in apparatus of various types, particularly portable apparatus.

The method is very quick and can thus be used to perform the interpolation operation on-line, for example for video sequences. In particular, the method of the present invention involves an extremely small computational load since it requires only a few elementary operations and can thus even be implemented by a program (software).

Naturally in order to satisfy contingent and specific requirements, an expert in the art may apply to the above-described interpolation method for obtaining a digital image many modifications and variations all of which, however, are included within the scope of protection of the invention as defined by the following claims.

**Claims**

1. An interpolation method (200) for obtaining a digital image constituted by a matrix of elements ($Pix_{i,j}$ (RGB)) each comprising at least one colour component (RGB) representative of an elemental area of the image, the method including the steps of providing (210) an incomplete digital image having at least one incomplete element ($Pix_{i,j}$ (R), $Pix_{i,j}$ (G), $Pix_{i,j}$(B)) in which at least one colour component (RGB) is missing, each missing colour component in each incomplete element being present in opposed elements disposed on opposite sides of the incomplete element along at least one direction,
characterized by the steps of

   determining (230), for each missing colour component of each incomplete element, an interpolation direction in which a variation of the corresponding colour components of the opposed elements is least, and

   setting (235) the missing colour component at a value equal to a mean of the corresponding colour components of the opposed elements along the interpolation direction.

2. An interpolation method (200) according to Claim 1, in which the mean is an arithmetic mean.

3. An interpolation method (200) according to Claim 1 or Claim 2, in which each element ($Pix_{i,j}$(RGB)) comprises a red colour component (R), a green colour component (G), and a blue colour component (B).

4. An interpolation method (200) according to Claim 3, in which all of the elements in the incomplete digital image are incomplete, one half of the incomplete elements ($Pix_{i,j}$(G)), in a chessboard-like arrangement, including only the green colour component (G), and the remaining incomplete elements ($Pix_{i,j}$(R), $Pix_{i,j}$(B)) including only the red colour component (R) or only the blue colour component (B) in respective alternate rows.

5. An interpolation method (200) according to Claim 3, in which a portion of the elements in the incomplete digital image are incomplete, all of the colour components (RGB) being missing in each incomplete element.

6. An interpolation method (200) according to any one of Claims 1 to 5, in which the colour components which are not missing in each incomplete element are unchanged.

7. An interpolation device (140) for obtaining a digital image constituted by a matrix of elements ($Pix_{i,j}$(RGB)) each comprising at least one colour component (RGB) representative of an elemental area of the image, the device (140) receiving an incomplete digital image having at least one incomplete element ($Pix_{i,j}$(R), $Pix_{i,j}$(G), $Pix_{i,j}$(B)) in which at least one colour component (RGB) is missing, each missing colour component in each incomplete element being present in opposed elements disposed on opposite sides of the incomplete element along at least one direction,
characterized in that it includes means (140) for determining, for each missing colour component of each incomplete element, an interpolation direction in which a variation of the corresponding colour components of the opposed elements is least, and for setting the missing colour component to be equal to a mean of the corresponding colour components of the opposed elements along the interpolation direction.

8. An interpolation device (140) according to Claim 7, in which the device (140) is produced in integrated form in a chip of semiconductor material.

9. A digital camera (100) comprising the interpolation device (140) according to Claim 7 or Claim 8.

10. A digital camera (100) according to Claim 9, further comprising means (120, 125, 130) for acquiring the incomplete digital image, comprising a light sensor (120) having a matrix of light-sensitive cells each associated with an element of the incomplete digital image, a filter (125) having a matrix of filter elements each of which covers a corresponding light-sensitive cell in order to transmit substantially only a red light (R), a green light (G), or a blue light (B), one half of the filter elements, in a chessboard-like arrangement, transmitting only the green light (G), and the remaining filter elements transmitting only the red light (R) or only the blue light (B) in respective alternate rows.

FIG.1

EP 0 980 187 A1

205 — Start

210 — Image

200

215 — Pix $_{i,J}$

220 — R,G,B

225 — Missing? — N / Y

230 — Gradient

235 — Mean

240 — All RGB? — N

245 — i=N? j=M? — N

Y

250 — End

FIG.2

**European Patent Office**

## EUROPEAN SEARCH REPORT

Application Number

EP 98 83 0493

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 732 859 A (EASTMAN KODAK CO) 18 September 1996 | 1-4,6-10 | H04N9/04 |
| Y | * page 3, line 12 - line 54; figures 1,2 * <br> * page 4, line 11 - line 47; figure 2 * <br> * page 5, line 31 * <br> --- | 5 | |
| Y | US 5 552 825 A (TALLURI RAJENDRA K ET AL) 3 September 1996 <br> * column 2, line 18 - line 26 * <br> * column 2, line 40 - line 52 * <br> * column 3, line 37 - line 62 * <br> * column 4, line 41 - column 8, line 49 * <br> ----- | 5 | |

TECHNICAL FIELDS SEARCHED (Int.Cl.6)

H04N

The present search report has been drawn up for all claims

| Place of search | Date of completion of the search | Examiner |
|---|---|---|
| THE HAGUE | 15 December 1998 | De Paepe, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 0 980 187 A1**

## ANNEX TO THE EUROPEAN SEARCH REPORT
## ON EUROPEAN PATENT APPLICATION NO.

EP 98 83 0493

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-1998

| Patent document cited in search report | | Publication date | Patent family member(s) | | Publication date |
|---|---|---|---|---|---|
| EP 0732859 | A | 18-09-1996 | US | 5629734 A | 13-05-1997 |
| | | | JP | 8298669 A | 12-11-1996 |
| US 5552825 | A | 03-09-1996 | NONE | | |

For more details about this annex : see Official Journal of the European Patent Office, No. 12/82